# FASCICULE DE BREVET EUROPEEN

(11) **EP 0 518 763 B1**
(45) Date de publication et mention de la délivrance du brevet: **08.03.1995**
(21) Numéro de dépôt: 92401612.4
(22) Date de dépôt: 10.06.1992
(51) Int. Cl.: F16C 19/34

(54) **Roulement à rouleaux croisés admettant des désalignements importants**
Kreuzrollenlager mit grosser Aurichtungsmöglichkeit
Cross-roller bearing allowing important misalignment

(30) Priorité: 13.06.1991 FR 9107249
(43) Date de publication de la demande: 16.12.1992
(73) Titulaire: R.K.S., F-89200 Avallon (FR)
(72) Inventeur: Martinez, Jacques, F-89200 Avallon (FR); Bourgeois-Jacquet, Pierre, F-89200 Avallon (FR)
(74) Mandataire: Casalonga, Axel

(56) Documents cités:
- WO-A-83/00729
- WO-A-91/05174
- FR-A- 1 229 564
- FR-A- 2 137 171
- FR-A- 2 615 575
- US-A- 4 929 098

## Description

La présente invention se rapporte à un roulement à rouleaux croisés comprenant deux bagues concentriques ayant chacune deux pistes de roulement disposées sensiblement perpendiculairement l'une à l'autre et une rangée de rouleaux croisés roulant chacun entre deux pistes opposées desdites bagues.

Une des caractéristiques de ce type de roulements est de pouvoir supporter à la fois des charges axiales et des charges radiales ainsi que des moments de renversement. Cette aptitude à supporter des charges combinées fait que ce type de roulements a de nombreuses applications, notamment dans les roulements ou couronnes d'orientation. Ces roulements, souvent de grandes dimensions (jusqu'à plusieurs mètres de diamètre), sont directement fixés sur les structures des machines, à savoir une bague sur le châssis fixe et l'autre sur la partie mobile de la machine. Les bagues du roulement comportent par ailleurs généralement des trous de fixation et l'une des bagues peut comporter par exemple une denture servant à l'entraînement en rotation de la partie mobile de la machine.

Les grandes dimensions des structures de machines, les difficultés d'usinage, le fait que les usinages sont parfois même réalisés sur le site d'installation de la machine, font que les surfaces d'appui sur lesquelles sont fixés les roulements comportent des défauts géométriques de planéité, conicité etc. De plus, sous l'action des charges appliquées, ces structures se déforment. Les bagues des roulements fixées sur ces structures subissent donc les mêmes déformations.

Il en résulte un défaut de désalignement qui modifie la portée des rouleaux sur les pistes et la répartition de pression le long de la génératrice de chaque rouleau.

Un exposé concernant les conséquences de la répartition non uniforme de la pression dans le cas de rouleaux cylindriques. (augmentation de la pression de Hertz aux extrémités des rouleaux, accélération de la fatigue du métal, diminution de la durée de vie du roulement) et les moyens déjà préconisés pour y remédier a fait l'objet d'un article de M. BURKHARD VON BREDOW intitulé "Micro-géométrie optimisée dans les roulements à rouleaux cylindriques modernes", paru dans la revue "La Technique Moderne" Mai-Juin 1987, pages 63 à 67.

Or, malgré les progrès apportés par les diverses solutions présentées dans cet article pour améliorer la distribution des contraintes de rouleaux cylindriques en contact avec une piste cylindrique (rouleaux cylindriques à extrémités coniques ou bombées, rouleaux légèrement bombés également appelés rouleaux à profil tonneau, rouleaux à profil dit logarithmique), aucune de ces propositions ne permet de réaliser un roulement à rouleaux croisés acceptant des désalignements importants, sans que cela entraîne une détérioration rapide du roulement. Par ailleurs, il y a lieu de noter que par le brevet US n° 1 235 116, il a été proposé, de donner un très léger bombé convexe ("minute crowning") aux surfaces de portée des rouleaux et/ou des pistes d'un roulement à rouleaux croisés, également dans le but d'améliorer des pressions excessives aux extrémités des rouleaux. Un tel profilage convexe des rouleaux et/ou des pistes ne permet cependant pas non plus à un roulement à rouleaux croisés d'accepter des désalignements importants.

Dans la demande de brevet français n° 2 137 171, on trouve une mention suivant laquelle, sur une couronne d'orientation à rouleaux croisés, il serait possible d'utiliser des rouleaux présentant un profil autre que cylindrique, par exemple un profil conique ou en tonneau.

Enfin, le document FR-A-1 229 564 propose, dans le cas d'un roulement à roule aux croisés coniques ou conoîdes, en vue d'éliminer les risques de frottement à sec des extrémités de grand diamètre des rouleaux sur les pistes et de détérioration du roulement, par suite d'une rupture du film du lubrifiant sous l'effet d'une pression spécifique trop élevée, de bomber de façon convexe lesdites extrémités des rouleaux afin d'augmenter la surface de contact de ces extrémités des rouleaux avec les pistes. Il s'agit là d'une solution apportée à un problème specifique aux roulements à rouleaux croisés coniques ou conoîdes, mais qui n'a pas d'incidence sur les problèmes de désalignement rencontrés sur les roulements à rouleaux croisés de forme générale cylindrique.

La présente invention vise un roulement a rouleaux croisés de forme générale cylindrique admettant des désalignements plus importants que les roulements connus de ce type, sans provoquer une modification des conditions de contact des rouleaux avec les pistes, entraînant des contraintes conduisant à une détérioration rapide du roulement.

L'invention vise, en outre, un roulement à rouleaux croisés de forme générale cylindrique avec effet d'autocentrage des rouleaux sur les pistes, de manière à empêcher ou pour le moins réduire le contact des faces d'extrémités des rouleaux avec les pistes de roulement.

Sur le roulement conforme à l'invention à rouleaux croisés de forme générale cylindrique comprenant deux bagues concentriques ayant chacune deux pistes de roulement disposées sensiblement perpendiculairement l'une à l'autre et une rangée de rouleaux croisés roulant chacun entre deux pistes opposées desdites bagues, la surface de roulement de chacun des rouleaux présente un profil convexe en arc de cercle avec un rayon de courbure supérieur au diamètre des rouleaux et inférieur au rayon du cercle primitif du roulement et chaque piste de chaque bague présente un profil concave en arc de cercle avec un rayon de courbure sensiblement égal à celui des rouleaux.

Il y a lieu de noter que ce profilage complémentaire en arc de cercle, donc sphérique, à la fois des rouleaux et des pistes de roulement sur un roulement à rouleaux croisés, c'est-à-dire un roulement transmettant à la fois des efforts axiaux et des efforts radiaux, n'a aucun rapport avec le profilage sphérique complémentaire des rouleaux et des pistes de roulement sur des roulements ou des butées à rotule sur rouleaux. En effet, sur les roulements ou butées à rotule, la courbure des rouleaux et des pistes extérieures est centrée sur l'axe du roulement, c'est-à-dire que le rayon de courbure est égal ou légèrement supérieur au rayon du cercle primitif. Au contraire, sur le roulement conforme à l'invention, le rayon de courbure des rouleaux et des pistes est inférieur et de préférence nettement inférieur au rayon du cercle primitif.

En se référant aux dessins schématiques annexés, on va décrire ci-après plus en détail un mode de réalisation illustratif et non limitatif d'un roulement conforme à l'invention; sur les dessins :

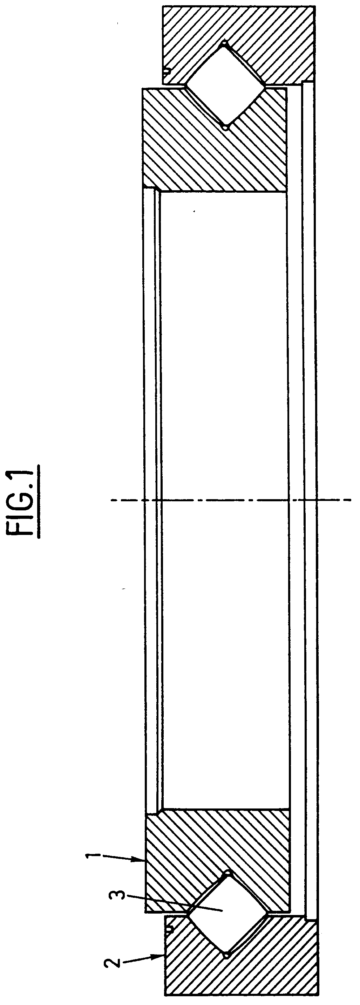

la figure 1 est une coupe axiale d'un roulement conforme à l'invention;
la figure 2 est une coupe partielle suivant la figure 1, à plus grande échelle;
la figure 3 représente un rouleau du roulement conforme à l'invention;
la figure 4 est une coupe partielle montrant le profil des pistes des deux bagues du roulement conforme à l'invention;
la figure 5 est une vue éclatée montrant plusieurs rouleaux et plusieurs intercalaires du roulement conforme à l'invention;
la figure 6 est une section partielle illustrant l'effet d'autocentrage des rouleaux sur les pistes de roulement.

Tel qu'illustré par les dessins, le roulement conforme à l'invention comprend une bague intérieure 1, une bague extérieure 2 entourant la bague 1 concentriquement, et une rangée de rouleaux 3 croisés. Il y a lieu de noter que ce roulement qui peut constituer en particulier une couronne d'orientation de grand diamètre est représenté sans les moyens de fixation des deux bagues 1 et 2 à des éléments de machine, dans la mesure où ces moyens constitués pas exemple par des trous de passage pour des vis sont bien connus et n'entrent pas dans le cadre de la présente invention.

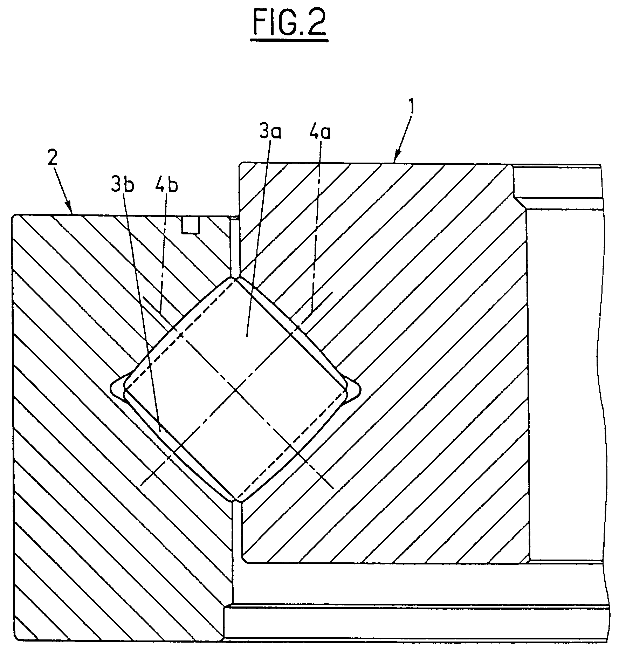

Sur la figure 2, on reconnaît que la rangée de rouleaux 3 comprend des rouleaux 3a dont les axes de rotation sont référencés 4a, et des rouleaux 3b dont les axes sont référencés 4b, les axes 4a étant perpendiculaires aux axes 4b. Les axes 4a et 4b font ici un angle de 45° avec l'axe du roulement, mais cet angle peut être différent.

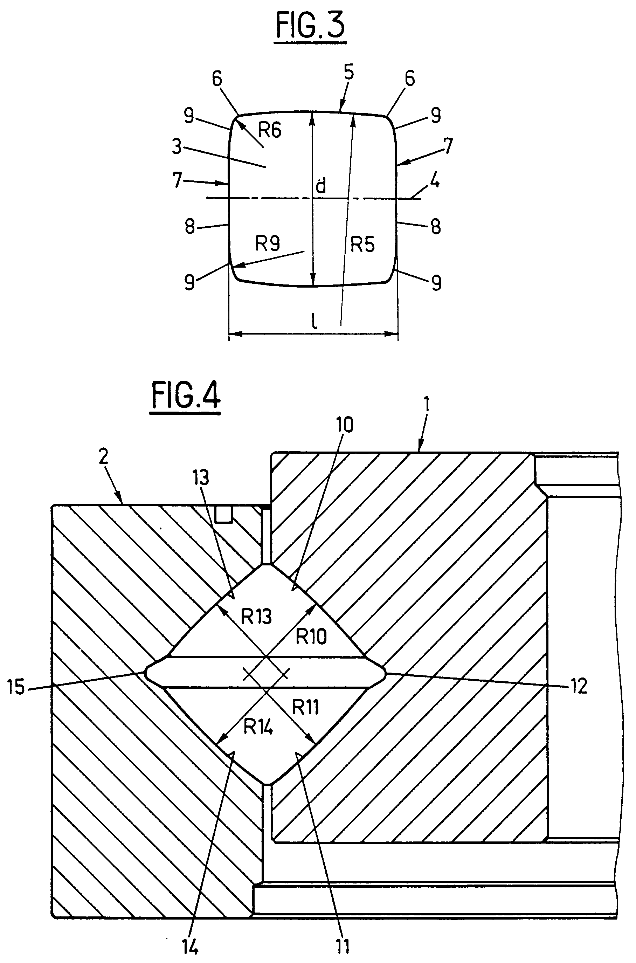

Tel que cela apparaît surtout sur la figure 3, chaque rouleau 3 présente une surface de roulement 5 ayant un profil convexe en arc de cercle avec un rayon de courbure R5, cette surface de roulement sphérique 5 se raccordant à chaque extrémité par un arrondi 6 à l'une des deux surfaces d'extrémité 7 du rouleau. Chaque surface d'extrémité 7 comprend une partie centrale 8 plane rejoignant l'arrondi 6 par une partie extérieure 9 arrondie avec un rayon R9, la partie plane pouvant être réduite voire nulle.

Comme le montre surtout la figure 4, la bague intérieure 1 comporte, dans sa surface extérieure, deux pistes de roulement 10 et 11 perpendiculaires l'une à l'autre, un congé 12 étant ménagé dans la bague 1 à l'endroit où les deux pistes 10 et 11 se raccordent l'une à l'autre. Chaque piste 10, 11 présente un profil concave en arc de cercle avec un rayon de courbure R10, R11 sensiblement égal au rayon de courbure R5 du rouleau 3.

De façon analogue, la bague extérieure 2 comporte, dans sa surface intérieure, deux pistes de roulement 13 et 14 perpendiculaires l'une à l'autre, se raccordant l'une à l'autre par un congé 15 et présentant chacune un profil concave en arc de cercle avec un rayon de courbure R13, R14 correspondant sensiblement aux rayons de courbure R10 et R11 des pistes 10 et 11 de la bague 1.

Tel que cela apparaît sur les figures 2 et 3, la longueur **ℓ** de chaque rouleau 3 est légèrement inférieure au diamètre maximal ***d*** du rouleau, de sorte que lorsque les rouleaux 3 se trouvent en place entre les pistes 10, 11, 13, 14 des deux bagues 1 et 2, leur surface de roulement 5 se trouve en contact avec deux pistes opposées 10 et 14 ou 11 et 13 des deux bagues 1 et 2, tandis que leurs faces d'extrémité 7 n'entrent normalement pas en contact avec les deux autres pistes de roulement. Cette absence de contact des faces d'extrémité des rouleaux avec les bagues est encore favorisée par les dégagements formés par les congés 12 et 15.

Les arrondis 9 des faces d'extrémité 7 des rouleaux 3 font que si, à la suite d'un désalignement des deux bagues 1 et 2, les faces d'extrémité 7 des rouleaux 3 touchent malgré tout les pistes des bagues 1 et 2, ce contact ne se fait par une zone réduite, mais sur une zone relativement étendue. évitant tout risque de coincement ou de grippage.

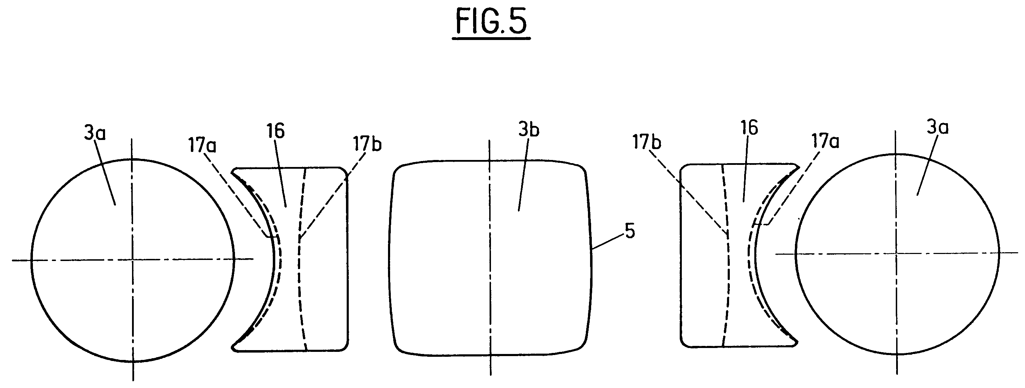

Selon la figure 5, les rouleaux croisés 3a, 3b sont guidés et maintenus à distance les uns des autres, de manière à ne pouvoir entrer en contact réciproque, par des intercalaires 16, en matière plastique, par exemple en polyamide, présentant chacun deux creux 17a, 17b opposés, ayant la forme générale de segments de cylindre à axes perpendiculaires. Pour pouvoir épouser la forme bombée sphérique des surfaces de roulement 5 des rouleaux 3a, 3b, les creux 17a, 17b présentent un profil concave sphérique adapté au profil convexe sphérique de la surface de roulement 5 des rouleaux 3.

Une importance toute particulière revient, dans le cadre de l'invention, au choix judicieux des rayons de courbure R5 de la surface de roulement 5 des rouleaux 3 et R10, R11, R13, R14 des pistes de roulement 10, 11, 13 et 14.

Ce rayon de courbure supérieur au diamètre des rouleaux et inférieur au rayon du cercle primitif du rouleaux peut être avantageusement compris, dans le cadre de l'invention, entre trois et dix fois et de préférence entre trois et cinq fois le diamètre des rouleaux. Ce profil particulier des rouleaux 3 et des pistes de roulement 10, 11, 16 et 14 a pour but, non seulement d'éviter en cas de désalignement des deux bagues 1 et 2, sous l'effet des charges extérieures, l'apparition de contraintes excessives à l'endroit des extrémités des surfaces de roulement des rouleaux 3, mais encore à exercer un effet d'autocentrage sur les rouleaux 3, de manière que ces derniers n'aient pas tendance à entrer en contact avec les pistes de roulement en regard de leurs faces d'extrémité 7.

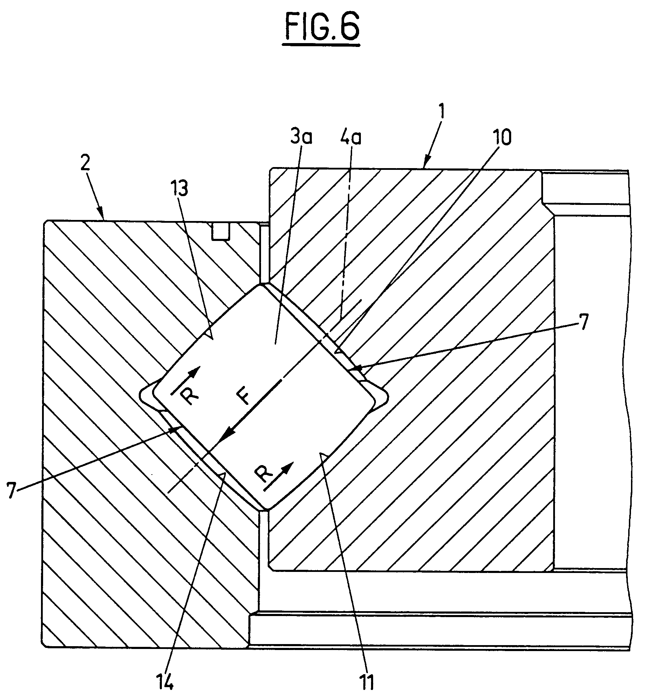

En effet, comme indiqué sur la figure 6, tout effort F exercé sur un rouleau, par exemple sur rouleau 3a, dans un sens suivant l'axe 4a de ce dernier entraîne, du fait de la forme sphérique du rouleau et de ses pistes de roulement 11 et 13, des réactions R en sens contraire sur le rouleau, ce qui empêche ou pour le moins limite les contacts des faces d'extrémités 7 du rouleau avec les autres pistes de roulement 10 et 14. Les phénomènes de frottement des faces d'extrémité des rouleaux sur les pistes se trouvent donc supprimés ou pour le moins réduits, ce qui fait que l'usure du roulement est diminuée et sa durée de vie sensiblement augmentée.

## Revendications

1. Roulement à rouleaux croisés de forme générale cylindrique comprenant deux bagues concentriques ayant chacune deux pistes de roulement disposées sensiblement perpendiculairement l'une à l'autre et une rangée de rouleaux croisés roulant chacun entre deux pistes opposées desdites bagues, caractérisé par le fait que la surface de roulement (5) de chaque rouleau (3) présente un profil convexe en arc de cercle avec un rayon de courbure supérieur au diamètre des rouleaux et inférieur au rayon du cercle primitif du roulement et que chaque piste (10, 11, 13, 14) de chaque bague (1, 2) présente un profil concave en arc de cercle avec un rayon de courbure (R10, R11, R13, R14) sensiblement égal à celui de la surface de roulement du rouleau.

2. Roulement suivant la revendication 1, caractérisé par le fait que ledit rayon de courbure est compris entre trois et dix fois le diamètre maximal (*d*) du rouleau (3).

3. Roulement suivant la revendication 2, caractérisé par le fait que ledit rayon de courbure est compris entre trois et cinq fois le diamètre maximal (*d*) du rouleau (3).

4. Roulement suivant l'une quelconque des revendications précédentes, caractérisé par le fait que les faces d'extrémité (7) de chaque rouleau (3) sont arrondies, tout au moins dans leur partie extérieure.

5. Roulement suivant l'une quelconque des revendications précédentes, caractérisé par le fait que la longueur (ℓ) des rouleaux (3) est inférieure au diamètre maximal (*d*) des rouleaux (3).

6. Roulement suivant l'une quelconque des revendications précédentes, comprenant, en outre, des intercalaires disposés entre les différents rouleaux croisés, chaque intercalaire comportant deux creux opposés ayant la forme de segments de cylindre à axes croisés, caractérisé par le fait que lesdits creux (17a, 17b) présentent un profil sphérique concave correspondant au profil sphérique convexe de la surface de roulement (5) des rouleaux (3).

## Claims

1. Cross-roller bearing of a generally cylindrical shape comprising each two concentric rings with two raceways each which are disposed substantially perpendicular with respect to one another, and a row of cross-rollers running each between two raceways of said rings disposed opposite with one another, characterized in that the running surface (5) of each roller (3) has a convex profile in circular arc form having a radius which is larger than the diameter of said rollers, and smaller than the bearing pitch circle radius, and that each raceway (10, 11, 13, 14) of each ring (1, 2) presents a concave profile in circular arc form having a curvature radius (R10, R11, R13, R14) which is substantially equal to that of the rolling surface of the roller.

2. Bearing as claimed in claim 1, characterized in that the curvature radius is contained in between three and ten times the maximum diameter (d) of said roller (3).

3. Bearing as claimed in claim 2, characterized in that the curvature radius is contained in between three and five times the maximum diameter (d) of said roller (3).

4. Bearing as claimed in any one of the above claims, characterized in that the outermost faces (7) of each roller (3) are rounded, at least in their outer parts.

5. Bearing as claimed in any one of the above claims, characterized in that the length (ℓ) of said rollers (3) is shorter than a maximum diameter (d) of said rollers (3).

6. Bearing as claimed in any one of the above claims containing, among other things, spacers which are disposed between the various cross-rollers, each spacer having two opposite cavities which have the shape of cylinder segments with crossed axes, characterized in that such cavities (17a, 17b) have a spherical-concave profile which corresponds to the spherical-convex profile of the running surface (5) of the rollers (3).

## Patentansprüche

1. Kreuzrollenlager von allgemein zylindrischer Form, enthaltend jeweils zwei konzentrische Ringe mit jeweils zwei Rollenlaufbahnen, die im wesentlichen senkrecht zueinander angeordnet sind, und eine Reihe Kreuzrollen, die jeweils zwischen zwei einander gegenüberliegenden Laufbahnen dieser Ringe laufen, dadurch gekennzeichnet daß die Lauffläche (5) jeder Rolle (3) ein konvexes Profil in Kreisbogenform aufweist mit einem Krümmungsradius, der größer ist als der Durchmesser der Rollen, und kleiner, als der Radius des Lagerteilkreises, und daß jede Laufbahn (10, 11, 13, 14) jedes Rings (1, 2) ein konkaves Profil in Kreisbogenform aufweist mit einem Krümmungsradius (R10, R11, R13, R14), der im wesentlichen gleich dem der Rolloberfläche der Rolle ist.

2. Lager gemäß Anspruch 1, dadurch gekennzeichnet, daß der Krümmungsradius zwischen drei- und zehnmal so groß ist wie der größte Durchmesser (d) der Rolle (3).

3. Lager gemäß Anspruch 2, dadurch gekennzeichnet, daß der Krümmungsradius zwischen drei- und fünfmal so groß ist wie der größte Durchmesser (d) der Rolle (3).

4. Lager gemäß einem beliebigen der vorstehenden Ansprüche, dadurch gekennzeichnet, daß die äußersten Flächen (7) jeder Rolle (3) gerundet sind, wenigstens in ihrem äußeren Teil.

5. Lager gemäß einem beliebigen der vorstehenden Ansprüche, dadurch gekennzeichnet, daß die Länge (ℓ) der Rollen (3) kleiner ist als der maximale Durchmesser (d) der Rollen (3).

6. Lager gemäß einem beliebigen der vorstehenden Ansprüche, enthaltend u.a. Zwischenstücke, die zwischen den verschiedenen Kreuzrollen angeordnet sind, wobei jedes Zwischenstück zwei einander gegenüberliegende Höhlungen aufweist, die die Form von Zylindersegmenten mit gekreuzten Achsen haben, dadurch gekennzeichnet, daß diese Höhlungen (17a, 17b) ein sphärisch-konkaves Profil aufweisen, das dem sphärischkonvexen Profil der Rolloberfläche (5) der Rollen (3) entspricht.
